# EUROPEAN PATENT APPLICATION

(11) **EP 4 715 329 A1**
(43) Date of publication of application: **25.03.2026**
(21) Application number: 24859158.8
(22) Date of filing: 03.07.2024
(51) Int. Cl.: G01C 17/28, G01C 17/38, G01C 19/00

(54) **AZIMUTH MEASUREMENT DEVICE**

(30) Priority: 29.08.2023 JP 2023138507
(71) Applicant: Murata Manufacturing Co., Ltd., Nagaokakyo-shi, Kyoto 617-8555 (JP)
(72) Inventor: KANEDA, Shinya, Nagaokakyo-shi, Kyoto 617-8555 (JP)
(74) Representative: Stöckeler, Ferdinand
(86) International application number: PCT/JP2024/024079
(87) International publication number: WO 2025/047113

(57) **Abstract**

An azimuth measurement device (1) includes a first angular velocity sensor (11), a rotation mechanism (13), and a second angular velocity sensor (12). The first angular velocity sensor (11) has a first detection axis (11D) extending in a horizontal direction and is configured to detect a first angular velocity around the first detection axis (11D) serving as a rotation center. The rotation mechanism (13) has a rotation axis (13R) extending in a vertical direction and is configured to rotate the first detection axis (11D) of the first angular velocity sensor (11) around the rotation axis (13R) serving as a rotation center. The second angular velocity sensor (12) is used to correct a rotation angle (α) of the first detection axis (11D) in the rotation mechanism (13). The second angular velocity sensor (12) has a second detection axis (12D) extending in the vertical direction and is configured to detect a second angular velocity around the second detection axis (12D) serving as a rotation center.

## Description

### Technical Field

The present invention relates to an azimuth measurement device.

### Background Art

Various azimuth measurement methods using azimuth measurement devices are known. Some examples are an analog magnetic method using a magnetic compass needle, a digital magnetic method using a magnetic sensor, a GPS method, and a method using a gyroscope.

For example, Non-Patent Document 1 discloses an azimuth measurement device and an azimuth measurement method. The azimuth measurement device includes a measurement unit for detecting the angular velocity associated with the Earth's rotation. The measurement unit includes an angular velocity sensor having a detection axis extending in a horizontal plane, and the angular velocity sensor is rotated around a vertical axis on a rotation mechanism. Measurement results are plotted in a graph of which the horizontal axis represents the rotation angle of the detection axis of the angular velocity sensor and the vertical axis represents measured angular velocity. A resulted waveform of the plot is fitted to a sine function to calculate the azimuth.

### Citation List

### Non Patent Document

Non Patent Document 1: I.P. Prikhodko, S.A. Zotov, Alexander A. Trusov, and A.M. Shkel, "What is MEMS Gyrocompassing? Comparative Analysis of Maytagging and Carouseling" Journal of Microelectromechanical Systems, Vol. 22, No. 6, pp. 1257-1266, December 2013.

### Summary of Invention

### Technical Problem

In the azimuth measurement device described in Non-Patent Document 1, however, if the azimuth measurement device happens to rotate around the vertical axis during the azimuth measurement, the rotation angle of the detection axis of the angular velocity sensor may deviate relative to the reference value, resulting in inaccurate calculation of the azimuth.

The present invention is made in view of the above circumstances, and an object of the present invention is to provide an azimuth measurement device that can improve the accuracy of azimuth measurement.

### Solution to Problem

According to an aspect of the present invention, an azimuth measurement device includes a first angular velocity sensor, a rotation mechanism, and a second angular velocity sensor. The first angular velocity sensor has a first detection axis extending in a horizontal direction and is configured to detect a first angular velocity around the first detection axis serving as a rotation center. The rotation mechanism has a rotation axis extending in a vertical direction and is configured to rotate the first detection axis of the first angular velocity sensor around the rotation axis serving as a rotation center. The second angular velocity sensor is used to correct a rotation angle of the first detection axis in the rotation mechanism. The second angular velocity sensor has a second detection axis extending in the vertical direction and is configured to detect a second angular velocity around the second detection axis serving as a rotation center.

### Advantageous Effects of Invention

Accordingly, the present invention can provide the azimuth measurement device that can improve the accuracy of azimuth measurement.

### Brief Description of Drawings

[Fig. 1] Fig. 1 is a schematic diagram illustrating a configuration of an azimuth measurement device according to a first embodiment.
[Fig. 2] Fig. 2 is a plan view illustrating a measurement unit.
[Fig. 3] Fig. 3 is a diagram illustrating an example of a physical configuration of a control unit.
[Fig. 4] Fig. 4 is a plan view illustrating the measurement unit that is rotated around a vertical axis.
[Fig. 5] Fig. 5 is a graph of a first angular velocity with respect to a rotation angle before correction.
[Fig. 6] Fig. 6 is a graph of the first angular velocity with respect to a rotation angle after correction.
[Fig. 7] Fig. 7 is a schematic diagram illustrating a configuration of an azimuth measurement device according to a second embodiment.

### Description of Embodiments

Embodiments of the present invention will be described. In the description of drawings, the same or similar elements are denoted by the same or similar reference signs. The drawings are illustrative, and the dimensions and shapes of elements are schematic. The technical scope of the present invention should not be interpreted as being limited to the embodiment.

An orthogonal coordinate system consisting of an X-axis, a Y-axis, and a Z-axis may be indicated in the drawings for convenience in order to clarify the mutual relationship among the drawings and to help understand the positional relationship of each element. The X-axis, the Y-axis, and the Z-axis correspond to each other among the drawings. The direction parallel to the X-axis is referred to as the "X-axis direction", and the direction parallel to the Y-axis is referred to as the "Y-axis direction". The direction parallel to the Z-axis is referred to as the "Z-axis direction". In addition, the direction in which each arrow of the X-axis, the Y-axis, and the Z-axis points is "positive" or "+(plus)", and the direction opposite to the direction of the arrow pointing is "negative" or "-(minus)". The plane defined by the X-axis and the Y-axis is the "XY plane", and the same applies to the other planes defined by other axes. The Z-axis direction is an example of a "vertical direction", and a direction extending along the XY plane is an example of a "horizontal direction".

### First Embodiment

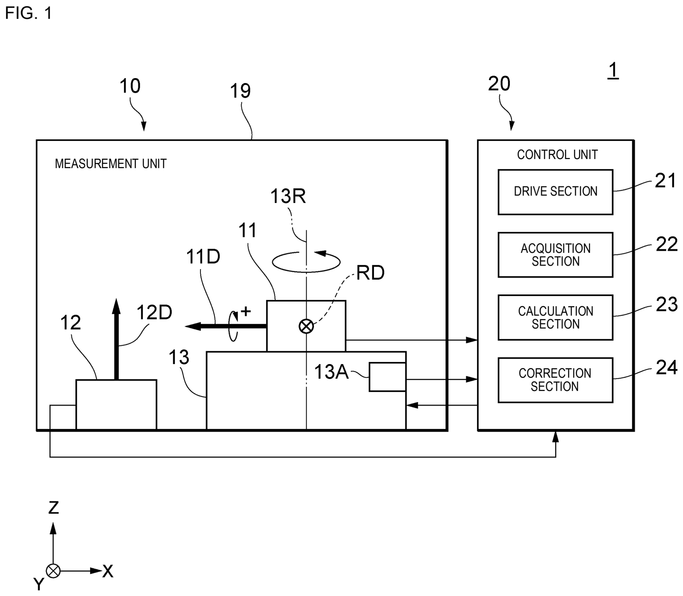

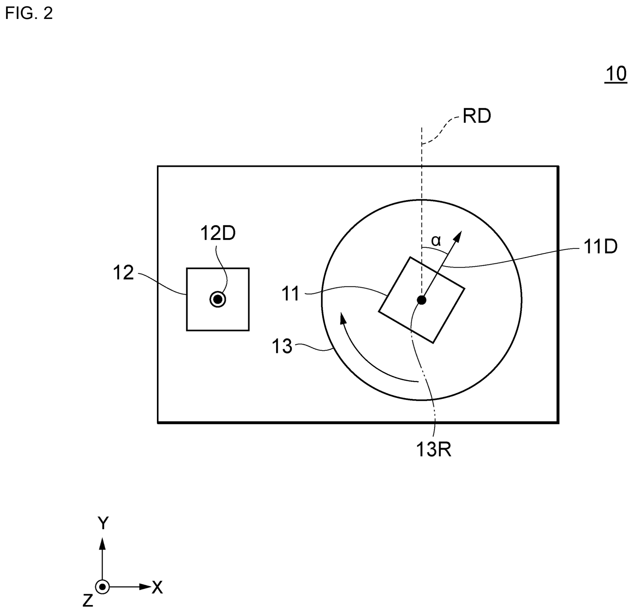

To begin with, the configuration of an azimuth measurement device 1 according to an embodiment of the present invention is described with reference to Figs. 1 and 2. Fig. 1 is a schematic diagram illustrating a configuration of the azimuth measurement device according to the first embodiment. Fig. 2 is a plan view illustrating a measurement unit.

The azimuth measurement device 1 determines the azimuth by measuring the angular velocity of the earth's rotation. The azimuth measurement device 1 is, for example, a north-finding device that finds the true north direction. The azimuth measurement device 1 includes a measurement unit 10 and a control unit 20.

The measurement unit 10 measures the angular velocity of the earth's rotation. As illustrated in Fig. 1, the measurement unit 10 includes a first angular velocity sensor 11, a second angular velocity sensor 12, a rotation mechanism 13, and a sensor housing 19.

The first angular velocity sensor 11 has a first detection axis 11D extending in a horizontal direction (along the XY plane) and detects a first angular velocity around the first detection axis 11D as the rotation center. The first angular velocity sensor 11 is, for example, a MEMS (micro-electro-mechanical system) gyro sensor but is not limited thereto insofar as the sensor can detect the angular velocity. When the measurement unit 10 is stationary, the first angular velocity corresponds to a component of the angular velocity of the earth's rotation along the first detection axis 11D that serves as the rotation center, the component being a horizontal component of the angular velocity of the earth's rotation at the latitude of the measurement point. In other words, the magnitude of the first angular velocity changes in accordance with the azimuth angle of the first detection axis 11D. To be concrete, let the angular velocity of the earth's rotation be ΩE and the latitude of the measurement point be φ. Because the angle between the earth's axis and the true north direction in the horizontal plane at the measurement point is φ, the horizontal component ωh of the angular velocity of the earth's rotation with the rotation center extending in the true north direction in the horizontal plane at the measurement point is expressed as ωh = ΩE × cosφ. When the azimuth angle θ of the first detection axis 11D is the angle between the first detection axis 11D and the true north direction in the horizontal plane, the first angular velocity ω, which is derived from the earth's rotation when the first detection axis 11D serves as the rotation center, is expressed as ω = ωh × cosθ = ΩE × cosφ × cosθ. In the above formula, the angular velocity ω is determined by the latitude φ and the azimuth angle θ of the first detection axis 11D because ΩE is constant (ΩE = 15.041 [dph]). When the first detection axis 11D is viewed from the first angular velocity sensor 11, the positive direction of the first angular velocity is clockwise. Under the condition of the azimuth angle θ of the first detection axis 11D being constant, the first angular velocity ω becomes maximum when the measurement location is on the equator (φ=0), and the closer to true north or true south, in other words, the larger the value φ, the smaller the first angular velocity ω becomes. In addition, under the condition of the latitude φ being constant, the first angular velocity ω becomes maximum when the first detection axis 11D points true north, in other words, when θ = 0. The first angular velocity ω becomes minimum when the first detection axis 11D points true south, in other words, when θ = 180. The first angular velocity ω becomes zero when the first detection axis 11D points true east or true west, in other words, when θ = 90 or 270. When the measurement location remains the same, ΩE × cosφ = k (constant). Accordingly, the first angular velocity ω can be expressed as ω = ΩE × cosφ × cosθ = k × sin (90 - θ). In other words, the first angular velocity ω can be expressed as a sine function with a variable being the azimuth angle θ of the first detection axis 11D.

The rotation mechanism 13 has a rotation axis 13R extending in the vertical direction (along the Z-axis), and the rotation mechanism 13 rotates the first detection axis 11D of the first angular velocity sensor 11 around the rotation axis 13R serving as the rotation center. A rotation angle α of the first detection axis 11D is an angle between the first detection axis 11D rotated by the rotation mechanism 13 and a reference direction RD in the XY plane. For example, the rotation mechanism 13 is a rotating table, and the first angular velocity sensor 11 is fixed onto the table surface of the rotation mechanism 13.

The rotation angle α is measured by a rotary encoder 13A. For example, the rotary encoder 13A is provided in the rotation mechanism 13 but may be provided outside the rotation mechanism 13.

The second angular velocity sensor 12 is used to correct the rotation angle α of the first detection axis 11D of the rotation mechanism 13. If the measurement unit 10 rotates around the vertical axis due to an external impact or the like, the first angular velocity sensor 11 rotates together with the rotation mechanism 13 and the rotary encoder 13A. As a result, the rotation angle of the first detection axis 11D deviates from the rotation angle α measured by the rotary encoder 13A. In such a case, the second angular velocity sensor 12 is used to correct the rotation angle α, which is the value measured by the rotary encoder 13A, to obtain the true rotation angle.

The second angular velocity sensor 12 is, for example, a MEMS gyro sensor, as is the case for the first angular velocity sensor 11, but is not limited thereto. The second angular velocity sensor 12 has a second detection axis 12D extending in the vertical direction (along the Z-axis), and the second angular velocity sensor 12 detects a second angular velocity around the second detection axis 12D as the rotation center. The second angular velocity is an angular velocity obtained when the measurement unit 10 rotates around the vertical axis due to an external impact or the like. The angular deviation of the orientation of the measurement unit 10 from the reference direction RD can be calculated using the rotation angle obtained by integrating the measurement value of the second angular velocity measured by the second angular velocity sensor 12. The rotation angle α can be thus corrected on the basis of the second angular velocity.

The second angular velocity sensor 12 is disposed at a position spaced from the rotation mechanism 13. In this case, the second angular velocity sensor 12 detects only the angular velocity of the measurement unit 10 that rotates around the vertical axis thereof. The second angular velocity sensor, however, may be provided on the rotation mechanism as is similar to the first angular velocity sensor. In this case, the second angular velocity sensor detects a composite angular velocity of the angular velocity of the rotation mechanism and the angular velocity of the measurement unit around the vertical axis. Accordingly, the angular velocity of the measurement unit is obtained, for example, by subtracting the angular velocity detected when the measurement unit is stationary from the detected result of the second angular velocity sensor. Alternatively, the angular velocity of the measurement unit may be obtained by subtracting the preset angular velocity of the rotation mechanism from the detected result of the second angular velocity sensor.

The sensor housing 19 accommodates the first angular velocity sensor 11, the second angular velocity sensor 12, and the rotation mechanism 13. Although not illustrated, the sensor housing 19 may include a communication module that enables the control unit 20 to communicate with the first angular velocity sensor 11, the second angular velocity sensor 12, and the rotation mechanism 13.

The control unit 20 controls the measurement unit 10 and measures the azimuth on the basis of the measurement results of the measurement unit 10. As illustrated in Fig. 1, the control unit 20 is connected to, and communicates with, the measurement unit 10. The control unit 20 includes a drive section 21, an acquisition section 22, a calculation section 23, and a correction section 24.

The drive section 21 drives the rotation mechanism 13. The acquisition section 22 acquires the first angular velocity from the first angular velocity sensor 11, the second angular velocity from the second angular velocity sensor 12, and the rotation angle α from the rotary encoder 13A. The calculation section 23 plots the first angular velocity against the rotation angle α and calculates the azimuth by fitting the plot with a sine function. The calculation section 23 may calculate the true north direction from the rotation angle α at the point where the first angular velocity becomes maximum without fitting with a sine function because the first angular velocity becomes maximum when the first detection axis 11D points true north.

The correction section 24 corrects the rotation angle α of the first detection axis 11D in the rotation mechanism 13 on the basis of the second angular velocity. For example, the correction section 24 corrects the rotation angle α after the rotation angle α is obtained from the rotation mechanism 13 and thereby changes the plot position in the calculation section 23. However, the correction method of the correction section 24 is not limited to the above. The correction section 24 may correct the rotation angle α before the rotation angle α is acquired from the rotation mechanism 13. For example, the correction section 24 may set the rotation angular velocity of the rotation mechanism 13 at a value obtained by subtracting the second angular velocity from a preset value for normal conditions. Alternatively, the correction section 24 may cause the drive section 21 to rotate the rotation mechanism 13 so as to match the orientation of the rotation mechanism 13 to the true rotation angle. Moreover, the correction section 24 may calibrate the rotary encoder 13A so that the value measured by the rotary encoder 13A can match the true rotation angle.

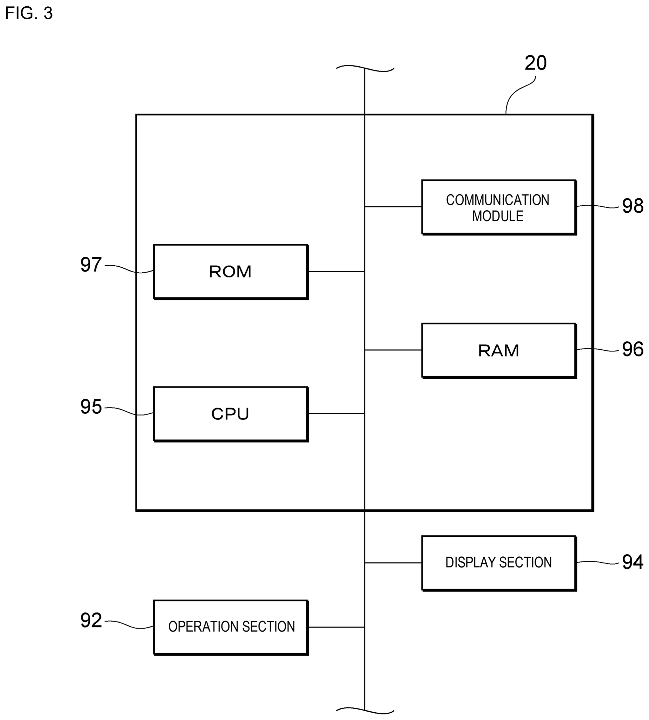

Next, a physical configuration of the control unit 20 will be described with reference to Fig. 3. Fig. 3 is a diagram illustrating an example of a physical configuration of a control unit.

The control unit 20 includes a central processing unit (CPU) 95, a random access memory (RAM) 96, a read only memory (ROM) 97, and a communication module 98. These components are connected to each other via a bus so as to be able to transmit and receive data. The CPU 95, the RAM 96, the ROM 97, and the communication module 98 are connected to an operation section 92 and also to a display section 94 via the bus so as to be able to transmit and receive data. The control unit 20 is, for example, a micro controller unit (MCU). The control unit 20 may be formed of a single computer or may be implemented by combining multiple distributed computers. For example, the control unit 20 can function the drive section 21, the acquisition section 22, the calculation section 23, and the correction section 24 by causing CPU 95 to execute a preset program stored in the RAM 96 or the ROM 97.

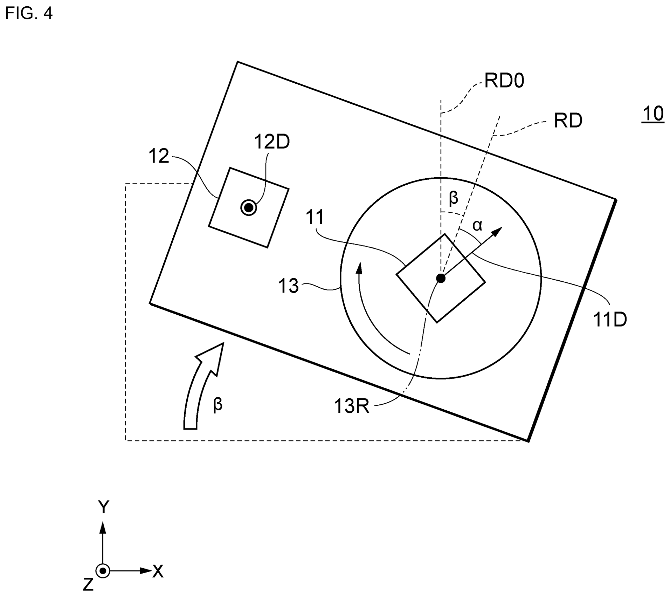

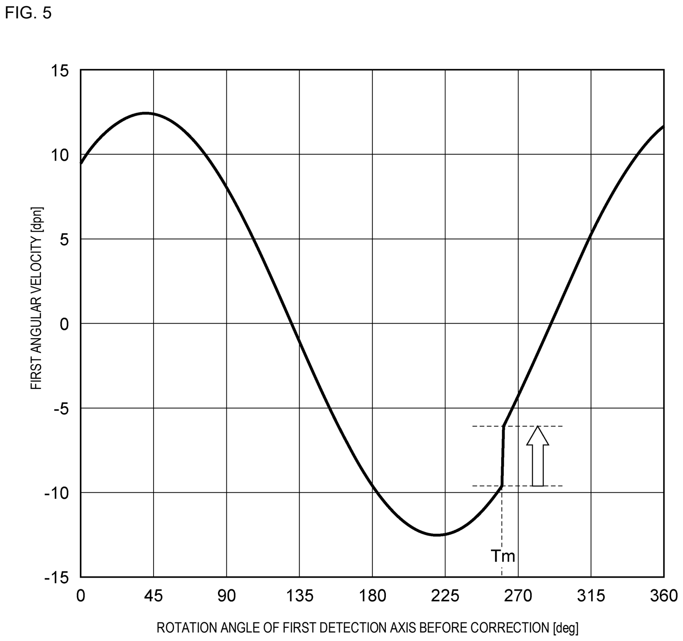

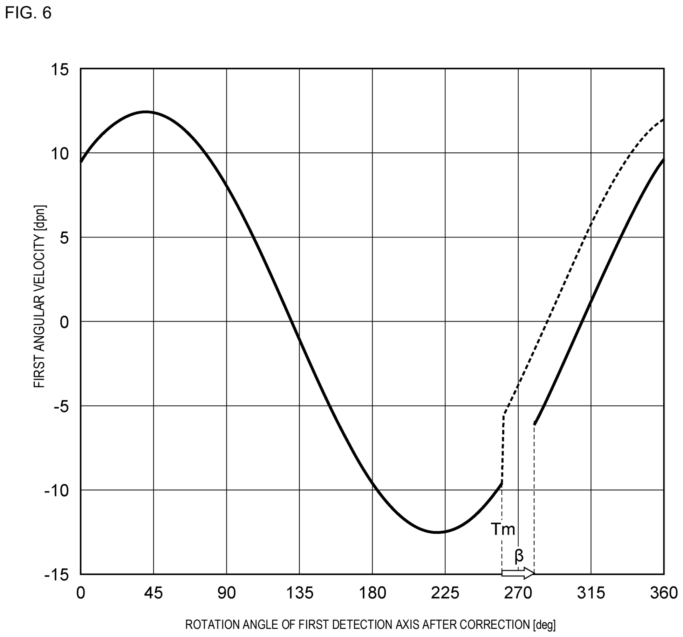

Next, the correction mechanism will be described more in detail with reference to Figs. 4 to 6. Fig. 4 is a plan view illustrating the measurement unit that has been rotated around the vertical axis. Fig. 5 is a graph illustrating a first angular velocity with respect to a rotation angle before correction. Fig. 6 is a graph illustrating the first angular velocity with respect to a rotation angle after correction. In the graph illustrated in Fig. 5, the horizontal axis represents the rotation angle of the first detection axis 11D before correction, and the vertical axis represents the first angular velocity. In the graph illustrated in Fig. 6, the horizontal axis represents the rotation angle of the first detection axis 11D after correction, and the vertical axis represents the first angular velocity.

The rotation mechanism 13 is actuated first to rotate the first detection axis 11D of the first angular velocity sensor 11 from the reference direction RD. At the same time, the first angular velocity sensor 11 is operated to detect the first angular velocity at predetermined intervals of the rotation angle α.

Assume that as illustrated in Fig. 4, the measurement unit 10 is rotated by an angle β in the same direction as the rotation direction of the rotation mechanism 13 at a timing Tm. When the initial reference direction before rotation is RD0, the reference direction RD of the rotation mechanism 13 is now rotated by an angle β from the initial reference direction RD0. Accordingly, α + β is the true rotation angle of the first detection axis 11D of the first angular velocity sensor 11 from the initial reference direction RD0. Accordingly, when the rotary encoder 13A obtains α as the rotation angle, the first angular velocity sensor 11 detects the first angular velocity at the true rotation angle, which is α + β. As a result, as illustrated in Fig. 5, the first angular velocity changes discontinuously at the timing Tm at which the measurement unit 10 is rotated. If the first angular velocity changes discontinuously in this way, an error will occur when the plot of the first angular velocity is fitted with a sine function.

Accordingly, when the second angular velocity sensor 12 detects the second angular velocity, the correction section 24 calculates the angle β on the basis of the second angular velocity. As illustrated in Fig. 6, the correction section 24 adds the rotation angle β to the rotation angle α measured by the rotary encoder 13A after the timing Tm. This can suppress the deviation of the plot from the sine function although the plot of the first angular velocity is interrupted once at the timing Tm. In other words, the error caused by fitting with the sine function can be suppressed. Accordingly, the azimuth measurement based on the graph illustrated in Fig. 6 can improve accuracy compared with the case where the azimuth is obtained from the graph as illustrated in Fig. 5. The azimuth angle obtained by fitting using the corrected graph illustrated in Fig. 6 is the azimuth angle with respect to the initial reference direction RD0, in other words, the azimuth angle when the measurement unit 10 is assumed not to be rotated. Accordingly, in order to calculate the azimuth angle of the measurement unit 10 that has been rotated by the angle β, it is necessary to add the rotation angle β of the measurement unit 10 to the azimuth angle obtained by fitting using the corrected graph illustrated in Fig. 6. For example, if the azimuth angle to true north obtained by fitting using the graph after correction is α = 30 degrees, and the rotation angle of the measurement unit 10 obtained by integrating the measurement value of the second angular velocity is β = 10 degrees, the azimuth angle of the measurement unit 10 to true north is α + β = 40 degrees.

As described above, the azimuth measurement device 1 according to the present embodiment includes the first angular velocity sensor 11 that has the first detection axis 11D extending in the horizontal direction. The azimuth measurement device 1 also includes the rotation mechanism 13 configured to rotate the first detection axis 11D around the rotation axis 13R that extends in the vertical direction and serves as the rotation center. The azimuth measurement device 1 further includes the second angular velocity sensor 12 to be used to correct the rotation angle α of the first detection axis 11D in the rotation mechanism 13. The second angular velocity sensor has a second detection axis 12D extending in the vertical direction and is configured to detect the second angular velocity around the second detection axis 12D serving as the rotation center.

According to the above, even if the measurement unit 10 is rotated around the vertical axis during azimuth measurement, the error in the rotation angle α caused by the rotation of the measurement unit 10 is corrected on the basis of the second angular velocity, which can suppress the occurrence of azimuth measurement error.

The following describes other embodiments. Note that the same or similar elements as those described in the first embodiment are denoted by the same or similar reference signs, and the description thereof will be omitted as appropriate. In addition, similar advantageous effects provided by similar features will not be repeated.

### Second Embodiment

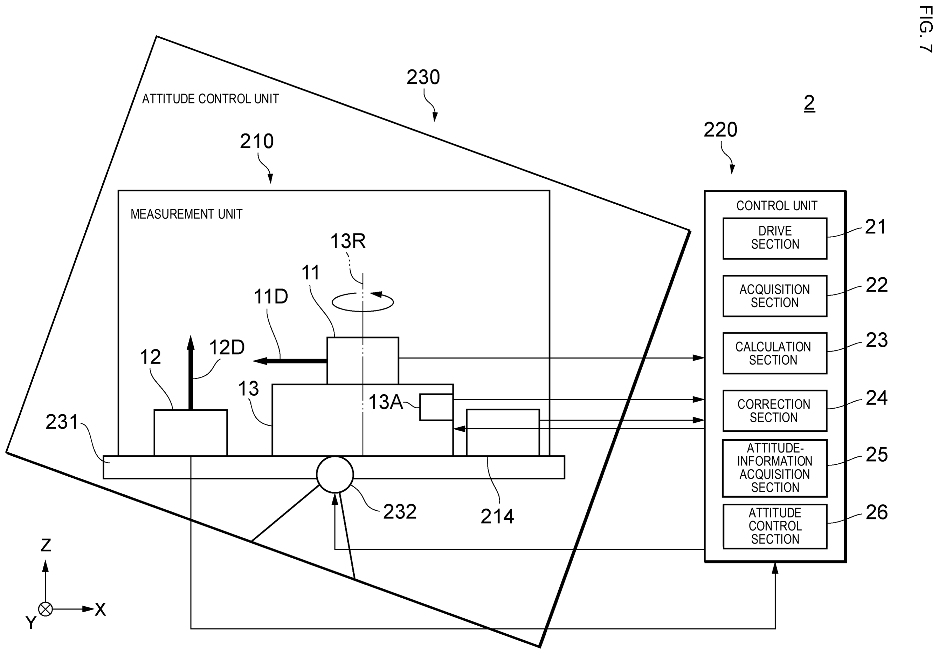

The configuration of an azimuth measurement device 2 according to a second embodiment will be described with reference to Fig. 7. Fig. 7 is a schematic diagram illustrating a configuration of the azimuth measurement device according to the second embodiment.

The azimuth measurement device 2 further includes an attitude control unit 230. A measurement unit 210 of the azimuth measurement device 2 is further provided with an attitude measurement mechanism 214. A control unit 220 of the azimuth measurement device 2 is further provided with an attitude-information acquisition section 25 and an attitude control section 26.

The attitude control unit 230 corrects the rotation of the measurement unit 210 around a rotation axis extending in the horizontal direction (along the XY plane). The attitude control unit 230 controls the attitudes of the first angular velocity sensor 11, the second angular velocity sensor 12, and the rotation mechanism 13. The attitude control unit 230 includes a two-axis gimbal mechanism 231 and a servomotor 232 that operates the two-axis gimbal mechanism 231.

The attitude measurement mechanism 214 measures the rotation of the measurement unit 210 around a rotation axis extending along the XY plane. In other words, the attitude measurement mechanism 214 measures the attitudes of the first angular velocity sensor 11, the second angular velocity sensor 12, and the rotation mechanism 13. The attitude measurement mechanism 214 is, for example, an inertial measurement unit (IMU). The attitude-information acquisition section 25 acquires information on the attitude of the measurement unit 210 from the attitude measurement mechanism 214. The attitude control section 26 servo-controls the two-axis gimbal mechanism 231 using the servomotor 232 in accordance with the information on the attitude of the measurement unit 210 acquired by the attitude-information acquisition section 25.

According to the present embodiment, the azimuth measurement device 2 is equipped with the attitude control unit 230 that can suppress the occurrence of azimuth measurement errors caused by the rotation of the measurement unit 210 around the rotation axis that extends in the horizontal direction, thereby improving the azimuth measurement accuracy.

Moreover, as one aspect of the present embodiment, the attitude control unit 230 can maintain the horizontal attitude of the measurement unit 210 with high accuracy since the attitude control unit 230 performs attitude control in accordance with the measurement results of the attitude measurement mechanism 214.

In this embodiment, the attitude control unit 230 servo-controls the attitude of the measurement unit 210 in accordance with the measurement results of the attitude measurement mechanism 214, but the present invention is not limited to this. The azimuth measurement device may control the attitude of the measurement unit by continuously operating the two-axis gimbal mechanism with a constant output without performing the attitude measurement of the attitude control unit.

Furthermore, the attitude control mechanism is not limited to the two-axis gimbal mechanism. For example, the attitude control mechanism may include two or more columns connected to the bottom surface of the measurement unit, and these columns are provided with lifting functions. The attitude control mechanism may be a passive-type attitude control mechanism having an air spring, a spring, an oil damper, an air damper, urethane rubber, or the like.

Some or all of the embodiments of the present invention are appended below. Note that the present invention is not limited to the following descriptions.

<1> An azimuth measurement device includes a first angular velocity sensor that has a first detection axis extending in a horizontal direction and is configured to detect a first angular velocity around the first detection axis serving as a rotation center. The azimuth measurement device also includes a rotation mechanism that has a rotation axis extending in a vertical direction and is configured to rotate the first detection axis of the first angular velocity sensor around the rotation axis serving as a rotation center. The azimuth measurement device further includes a second angular velocity sensor to be used to correct a rotation angle of the first detection axis in the rotation mechanism. The second angular velocity sensor has a second detection axis extending in the vertical direction and is configured to detect a second angular velocity around the second detection axis serving as a rotation center.
<2> The azimuth measurement device according to <1> above further includes a correction section configured to correct the rotation angle of the first detection axis in the rotation mechanism on a basis of the second angular velocity.
<3> The azimuth measurement device according to <2> above further includes a calculation section configured to plot the first angular velocity against the rotation angle and to calculate an azimuth by fitting the plot to a sine function.
<4> In the azimuth measurement device according to <2> or <3> above, the correction section corrects the rotation angle after the rotation angle is obtained from the rotation mechanism.
<5> In the azimuth measurement device according to <4> above, the correction section adds a rotation angle calculated on a basis of the second angular velocity measured by the second angular velocity sensor to the rotation angle of the first detection axis obtained from the rotation mechanism.
<6> In the azimuth measurement device according to <2> or <3> above, the correction section corrects the rotation angle before the rotation angle is obtained from the rotation mechanism.
<7> In the azimuth measurement device according to <6> above, the correction section sets the rotation angular velocity of the rotation mechanism at a value obtained by subtracting the second angular velocity measured by the second angular velocity sensor from a preset value for normal conditions.
<8> The azimuth measurement device according to any one of <1> to <7> above further includes an attitude control unit configured to control attitudes of the first angular velocity sensor, the rotation mechanism, and the second angular velocity sensor.
<9> In the azimuth measurement device according to <8> above, the attitude control unit is a two-axis gimbal mechanism.
<10> The azimuth measurement device according to <8> or <9> above further includes an attitude measurement mechanism configured to measure the attitudes of the first angular velocity sensor, the rotation mechanism, and the second angular velocity sensor. The attitude control unit controls the attitudes on a basis of measurement results of the attitude measurement mechanism.

As described above, according to an aspect of the present invention, an azimuth measurement device that can improve the accuracy of azimuth measurement can be provided.

Note that the above-described embodiments are provided to facilitate understanding of the present invention and are not intended to limit the present invention. The present invention may be modified/improved without departing from the spirit of the present invention, and the present invention includes equivalents thereof. In other words, the embodiments and/or the modification examples may be subjected to design changes by a person skilled in the art, but such modifications fall within the scope of the present invention insofar as the modifications have characteristic features of the present invention. For example, the elements and their arrangements, materials, conditions, shapes, sizes, etc., of the embodiments and/or modification examples are not limited to those described by way of example but may be modified as appropriate. In addition, the embodiments and modification examples are illustrative. The configurations described in different embodiments and/or modification examples can be partially replaced or combined, and such replacements and combinations also fall within the scope of the present invention insofar as they have the characteristic features of the present invention.

### Reference Signs List

- 1: azimuth measurement device
- 10: measurement unit
- 11: first angular velocity sensor
- 11D: first detection axis
- 12: second angular velocity sensor
- 12D: second detection axis
- 13: rotation mechanism
- 13R: rotation axis
- 13A: rotary encoder
- RD: reference direction
- α: rotation angle
- 20: control unit
- 21: drive section
- 22: acquisition section
- 23: calculation section
- 24: correction section
- 214: attitude measurement mechanism
- 230: attitude control unit
- 231: two-axis gimbal mechanism
- 232: servomotor
- 25: attitude-information acquisition section
- 26: attitude control section

## Claims

1. An azimuth measurement device comprising:
a first angular velocity sensor that has a first detection axis extending in a horizontal direction and is configured to detect a first angular velocity around the first detection axis serving as a rotation center;
a rotation mechanism that has a rotation axis extending in a vertical direction and is configured to rotate the first detection axis of the first angular velocity sensor around the rotation axis serving as a rotation center; and
a second angular velocity sensor to be used to correct a rotation angle of the first detection axis in the rotation mechanism, the second angular velocity sensor having a second detection axis extending in the vertical direction, the second angular velocity sensor being configured to detect a second angular velocity around the second detection axis serving as a rotation center.

2. The azimuth measurement device according to Claim 1, further comprising:
a correction section configured to correct the rotation angle of the first detection axis in the rotation mechanism on a basis of the second angular velocity.

3. The azimuth measurement device according to Claim 2, further comprising:
a calculation section configured to plot the first angular velocity against the rotation angle and to calculate an azimuth by fitting the plot to a sine function.

4. The azimuth measurement device according to Claim 2 or 3, wherein
the correction section corrects the rotation angle after the rotation angle is obtained from the rotation mechanism.

5. The azimuth measurement device according to Claim 4, wherein
the correction section adds a rotation angle calculated on a basis of the second angular velocity measured by the second angular velocity sensor to the rotation angle of the first detection axis obtained from the rotation mechanism.

6. The azimuth measurement device according to Claim 2 or 3, wherein
the correction section corrects the rotation angle before the rotation angle is obtained from the rotation mechanism.

7. The azimuth measurement device according to Claim 6, wherein
the correction section sets the rotation angular velocity of the rotation mechanism at a value obtained by subtracting the second angular velocity measured by the second angular velocity sensor from a preset value for normal conditions.

8. The azimuth measurement device according to any one of Claims 1 to 7, further comprising:
an attitude control unit configured to control attitudes of the first angular velocity sensor, the rotation mechanism, and the second angular velocity sensor.

9. The azimuth measurement device according to Claim 8, wherein
the attitude control unit is a two-axis gimbal mechanism.

10. The azimuth measurement device according to Claim 8 or 9, further comprising:
an attitude measurement mechanism configured to measure the attitudes of the first angular velocity sensor, the rotation mechanism, and the second angular velocity sensor, wherein
the attitude control unit controls the attitudes on a basis of measurement results of the attitude measurement mechanism.
